# EUROPEAN PATENT SPECIFICATION

(11) **EP 3 102 381 B1**
(45) Date of publication and mention of the grant of the patent: **16.05.2018**
(21) Application number: 15704149.2
(22) Date of filing: 23.01.2015
(51) Int. Cl.: B29C 49/04, B29C 49/24, B29C 49/00, B65D 25/20, B65D 1/02, B29L 31/00

(54) **CONTAINER FORMED OF A ONE-PIECE DISTORTION PRINTED THERMOPLASTIC SUBSTRATE**
BEHÄLTER AUS EINEM EINTEILIGEN GEDRUCKTEN THERMOPLASTISCHEN SUBSTRAT MIT VERFORMUNG
RÉCIPIENT FORMÉ D'UN SUBSTRAT THERMOPLASTIQUE IMPRIMÉ EN DISTORSION EN UNE PIÈCE

(30) Priority: 23.01.2014 US 201461930621 P
(43) Date of publication of application: 14.12.2016
(73) Proprietor: Serac Group, 72400 La Ferté Bernard (FR)
(72) Inventor: ETESSE, Patrick, Jean-Francois, B-1853 Brussels (BE)
(74) Representative: Lavialle, Bruno François Stéphane
(86) International application number: PCT/US2015/012559
(87) International publication number: WO 2015/112781

(56) References cited:
- DE-A1-102006 059 798
- FR-A1- 2 302 183
- FR-A1- 2 368 411
- US-A- 5 447 678
- US-A1- 2005 023 185

## Description

### FIELD OF THE INVENTION

Container formed of a one-piece distortion printed thermoplastic substrate.

### BACKGROUND OF THE INVENTION

Blown plastic containers can be thermoformed using processes known in the art, including extrusion blow molding, injection blow molding, injection stretch and blow molding. The plastic container can be part of a finished package that includes a closure for the plastic container.

Typically, the containers are manufactured on an independent manufacturing line. The containers are then transferred to a filling line on which the containers are filled with product. Depending on the labeling technique employed, labels are applied during formation of the container or after formation of the container.

Equipment for labeling containers during formation of the container is complex because the label needs to be precisely located during formation of the container. Further, such labeling equipment and the labels being applied need to be robust to the high temperatures required to form containers. Examples of labeling techniques that can be used during container formation include in-mold labeling and blow-molded sleeve labels that are applied to the container pre-form prior to blow molding.

A label can be applied to a container after formation of the container, before or after filling. Such labeling can occur before or after filling the container. The label is typically applied in a separate labeling unit operation. Like the equipment for providing labeling during formation of the container, such labeling equipment can be complex due to the irregular shape of the container to which a label is applied. Further, such equipment needs to be able to be performed at high speed to maintain economic viability. Examples of labeling techniques that can be used after container formation include direct object printing (silk-screen, tampography, flexography, offset-lithography, dry-offset, and letterset), adhesive labels, heat transfer labels, wet glue labels, stretch sleeve labels, and shrink-sleeve labels.

Regardless of the type of label employed and the point at which the label is applied, the equipment to perform the labeling is often customized to handle the particular shape of the container to be labeled. This is particularly true for non-standard container shapes that are typically employed by manufacturers of high quality products having a branded presence.

The complex equipment for labeling containers and potential sacrifice in manufacturing line speed necessarily adversely impacts the cost of the product sold to consumers. Thus, there is a continuing unaddressed need for labeled containers that can be formed at high speed and low cost.

Related containers and processes for making them are described in documents DE10 2006 059798A1 and US5447 678A.

### SUMMARY OF THE INVENTION

A container comprising: an open end; a closed end opposing the open end; a container wall extending longitudinally between the closed end and the open end about a longitudinal axis; an end seam extending at least partially across the closed end; and a longitudinal overlapping seam extending from the end seam, a portion of the overlapping seam extending longitudinally along the container wall from the closed end to a neck portion proximal the open end; wherein the closed end and the container wall comprise a one-piece distortion printed thermoplastic substrate forming the closed end and the container wall; and wherein a common one-piece distortion printed thermoplastic substrate forms both the closed end and the container wall..

### BRIEF DESCRIPTION OF THE DRAWINGS

Figure 1 is a drawing of an apparatus for forming a web into a loose conduit.
Figure 2 is a drawing of the conformer in an open position.
Figure 3 is a drawing of the conformer in a closed position.
Figure 4 is a drawing of an apparatus for forming a container.
Figure 5 is a partial view of a blow mold engaged with a calibration mandrel and a blown container.
Figure 6 cutaway view of an intermediate tube in a closed blow mold.
Figure 7 is side view of a container after blow molding.
Figure 8 is a top view of a container showing the open end.
Figure 9 is the open end of a container.
Figure 10 is a drawing of a container, a portion of which is rendered in a section view to show the interior volume and interior surface of the container.
Figure 11 is perspective view of container in which the closed end of the container is visible.
Figure 12 is a cross section of the container of Figure 10 as marked in Figure 10.
Figure 13 is a drawing of a snap-on plug seal closure operatively engaged with the open end of the container, a portion of the plug seal closure and container rendered in a section view.
Figure 14 is a drawing of a snap-on plug seal closure operatively engaged with the open end of the container, a portion of the plug seal closure and container rendered in a section view.
Figure 15 is a drawing of a flip-top plug seal closure operatively engaged with the open end of the container, a portion of the plug seal closure and container rendered in a section view.
Figure 16 is a drawing of a threaded plug seal closure operatively engaged with the open end of the container, a portion of the plug seal closure and container rendered in a section view.
Figure 17 is a drawing of the open end of a container illustrating the dimension for the inside diameter.
Figure 18 is a drawing of a package comprising a container and a plug seal closure operatively engaged with an open end of the container.
Figure 19 is a tooth paste tube.
Figure 20 is drawing of printed planar web being fed into an apparatus for forming a web into a loose conduit.
Figure 21 is a drawing of a printed planar web.
Figure 22 is a cutaway view of an intermediate tube in a closed blow mold and a container, illustrating the transformation of a first image into a second image.
Figure 23 is a drawing of a container in which the one-piece distortion printed thermoplastic substrate comprises printing at the overlapping seam.
Figure 24 is a drawing of a container in which the overlapping seam comprises an outer portion viewable external to the container and the outer portion and the inner portion both comprise printing.
Figure 25 is a drawing of a container in which the closed end and the container wall comprise a one-piece distortion printed thermoplastic substrate.
Figure 26 is a drawing of a container having printing on the container wall and closed end with such printing extending from the container wall to the closed end.

### DETAILED DESCRIPTION OF THE INVENTION

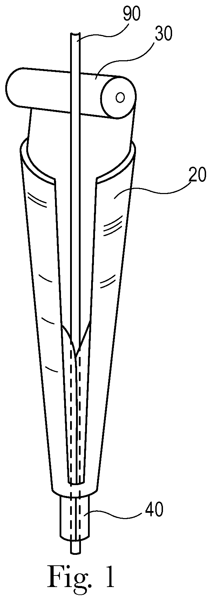

A container as contemplated herein can be formed as follows. First a web 30 can be provided wrapped around an unwinding roll 10, as shown in Fig. 1. The web 30 can be a planar web of thermoplastic sheet substrate. The web 30 can be a planar web of thermoplastic sheet substrate comprising a composition selected from the group consisting of polyethylene terephthalate, polystyrene, polypropylene, polyethylene, polyvinyl chloride, nylon, ethyl vinyl alcohol, and laminated sheets or mixtures thereof. The web 30 can comprise a polyolefin. The web 30 can have a thickness of between about 200 µm and about 1000 µm. The web 30 can have a thickness of between about 300 µm and about 800 µm. The web 30 can comprise an ethylene vinyl alcohol (EVOH) layer having thickness between about 10 µm and about 30 µm. The web 30 can comprise an EVOH layer having thickness between about 10 µm and about 30 µm sandwiched between two layers of polyolefin material.

The web 30 can be a laminate of different materials. The web 30 can be a co-extrusion of different materials. The web 30 can consist of a singular polymeric material. The web 30 can have one or more barrier layers. Since it is generally thought to be less complicated to form flat webs comprised of multiple layers than it is to form multi-layered containers by the processes of extrusion blow molding, injection blow molding, injection stretch blow molding, and the like, the process disclosed herein of forming a planar web into a container and the resulting containers are thought to be particularly practical.

The web 30 can be fed through a forming guide 20 to gradually form the planar web 30 into a loose conduit 40. The forming guide 20 can be a funnel or be a section of a funnel or a portion of a funnel. The forming guide 20 can be a plate of metal or plastic having a shape such that as the web 30 is unwound from the roll 10, the web 30 is gradually deformed into the shape of a loose conduit 40 in a manner such that the loose conduit is free from wrinkles, folds, or creases. The forming guide 20 can be a solid material or can be providing with one or more of apertures, slots, grooves, ridges, and the like to help the flat web 30 be transitioned from a flat web 30 into loose conduit 40. The forming guide 20 can be a series of wires set in a frame to have the shape of a funnel or a section of funnel or portion of a funnel. The forming guide 20 can be comprises of a mesh or screen material. In essence, the forming guide 20 need only to be able to assist in transitioning the flat web 30 into loose conduit 40. The web 30 moves through the forming guide 20 to be formed into loose conduit 40. The web 30 and loose conduit 40 move towards the conformer. Movement of the web 30 and loose conduit 40 can be indexed with opening and closing of the conformer so as to move when the conformer is in an open position.

The forming guide 20 can be set around a blowing cane 90 that extends through the forming guide 20 such that that loose conduit 40 is wrapped around or partially around the blowing cane 90. The blowing cane 90 provides for pressurized and or heated gas that is used in a subsequent portion of the process to form the container by blow molding.

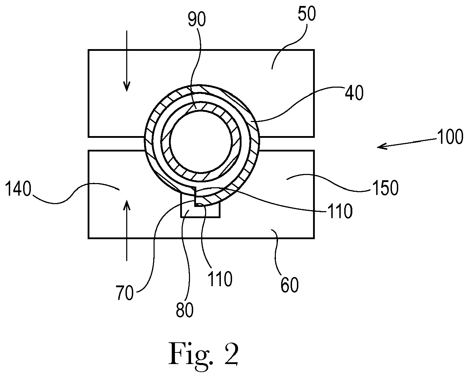

The loose conduit 40 is fed into the conformer 100, as shown in Fig. 2. Figure 2 is a top view of the conformer 100 in which the sections of the blowing cane 90 and loose conduit 40 are rendered. As shown in Fig. 2, the blowing cane 90 and loose conduit 40 fit within the conformer 100. The blowing cane 90 extends through the conformer 100 further down into the process. The loose conduit 40 is fed into the conformer 100 with the conformer 100 in an open position, as shown in Fig. 2 in which the first half 50 and second half 60 of the conformer 100 are in an open position. The conformer 100 comprises a first half 50 and a second half 60, the first half 50 and second half 60 being mounted about the blowing cane 90 and loose conduit 40. The first half 50 and second half 60 can translate towards and away from the blowing cane 90 and loose conduit 40. A hydraulic, lever, chain, or other mechanical system can be provided to translate the first half 50 and second half 60 of the conformer 100 towards and away from the blowing cane 90 and loose conduit 40. The second half 60 of the conformer 100 can be provided with an abutment 70 against which a lateral edge 110 of the loose conduit 40 can abut. As the loose conduit 40 is fed into the conformer 100, a lateral edge 110 of the loose conduit 40 can abut against the abutment 70 to true up lateral edges 100 of the loose conduit 40 with respect to one another so that the lateral edges 110 of the loose conduit 40 are parallel to one another and in an overlapping relationship with respect to one another.

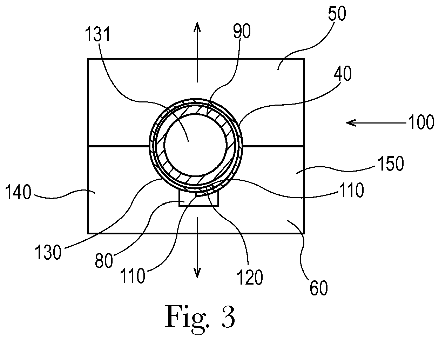

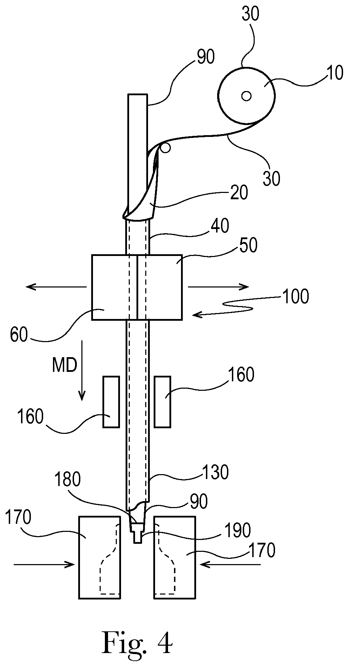

The conformer 100 can be provided with a bonding implement 80 proximal the abutment 70. The bonding implement 80 can be an ultrasonic bonding apparatus or thermal bonding apparatus. When the conformer 100 is in the closed position, the bonding implement 80 can bond an overlapping portion 120 of the loose conduit 40 to form the intermediate tube 130. The bonded overlapping portion 120 becomes the overlapping seam on the container. The intermediate tube 130 can be described as being like a hose having an overlapping seam extending along the length of the hose. The abutment 70 can extend through the conformer 100 and the abutment 70 can be parallel to the direction of movement of the loose conduit 40. Described otherwise, the abutment 70 can extend partially along or completely along the second half 60 of the conformer 100 orthogonal to the direction of translation of the first mold half 50 and or second mold half 60. The second half 60 of the conformer 100 can have a first quarter 140 and a second quarter 150 with the first quarter 140 and second quarter 150 offset with respect to one another at the abutment 70. The amount of the offset can be greater than or equal to the thickness of the web 30. Sized and dimensioned as such, when the conformer 100 is transitioned from the open position shown in Fig. 2 to the closed position as shown in Fig. 3, one edge of the loose conduit 40 can slide over or fit within the other edge of the loose conduit 40 so as to be in an overlapping relationship wherein the lateral edges 110 of the loose conduit are moved into an overlapping relationship such the lateral edges 110 are parallel to one another. The loose conduit 40 can have a cross section that is an approximately cylindrical shape. The loose conduit 40 can have a cross section that is an approximately oval shape. The first mold half 50 and the second mold half 60, and the portions thereof that are the first quarter 140 and second quarter 150, can be shaped to provide the desired shape of the loose conduit 40 and ultimately the desired shape of the intermediate tube 130 that is formed when the conformer 100 is closed and the overlapping portion 120 is bonded. The intermediate tube 130 can have an intermediate tube open area 131 that is the interior cross sectional area of the intermediate tube 130 measured orthogonal to the machine direction. As shown in Fig. 4, the loose conduit 40 can have a cross section that is an approximately tubular shape. The actual shape of the loose conduit 40 is not critical so long as loose conduit can be positioned about the blowing cane 90. The loose conduit 40 can fit around the blowing cane 90 and can move along the length of the blowing cane in the machine direction MD. The machine direction MD is the direction of travel of the web 30, loose conduit 40, intermediate tube 130, and container 200 in the process of making the container 200.

After the intermediate tube 130 is formed, the intermediate tube 130 can pass through a pre-heater 160. The pre-heater 160 can heat the intermediate tube 130 such that when the intermediate tube 130 enters the blow mold 170, the intermediate tube 130 is at a temperature such that the intermediate tube 130 can be blow molded into container. As shown in Fig. 4, the blowing cane 90 extends through the forming guide 20, loose conduit 40, conformer 100, and intermediate tube 130. The blowing cane 90 extends into the blow mold 170. The blowing cane 90 can provide gas, such as air to blow mold the finished container. The blow mold 170 defines a cavity into which a portion of the intermediate tube 130 is blown to form the finished container. The cavity defined by the blow mold 170 can have the shape of the finished container. Blow molding is a thermoforming process that imparts certain physical attributes to the finished container. The blow mold 170 can be a heated blow mold.

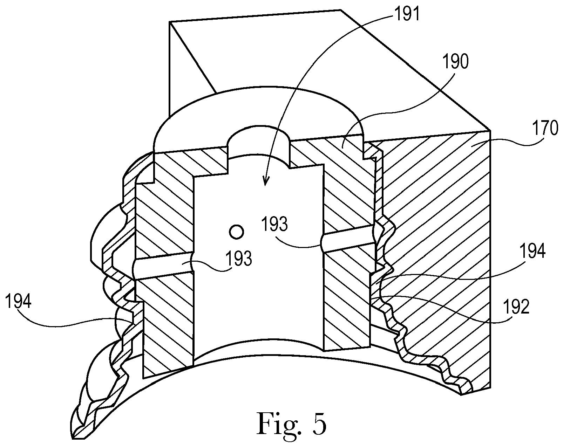

A mandrel 192 extends from the blowing cane terminus 180. The mandrel 192 can be a calibration mandrel 190 if a calibrated neck is desired for the finished container. The mandrel 192 or calibration mandrel 190 can be used to define the open end of the container. A cross section of a calibration mandrel 190 is shown in Fig. 5. The calibration mandrel 190 has an interior portion 191 and a bearing surface 192. The interior portion 191 is in fluid communication with the blowing cane 90 and comprises one or more ports 193 in fluid communication with the interior portion 191.

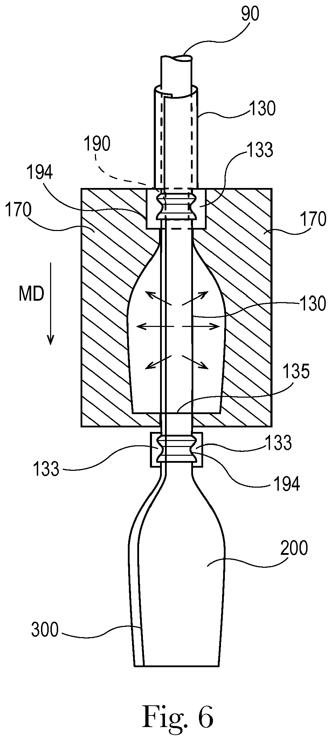

The intermediate tube 130 can be advanced over the blowing cane 90 and mandrel 192, or calibration mandrel 190 if provided, that is attached to the blowing cane 90. Once the intermediate tube 130 is in the blow molding position, the halves of the blow mold 170 close upon the intermediate tube 130. The blow mold 170 encloses a portion of the intermediate tube 130 and conforms at least a portion of the intermediate tube 130 to at least a portion of the mandrel 192, or calibration mandrel 190 if provided, as shown in Fig. 6. The intermediate tube 130 fits over the mandrel 192, or calibration mandrel 190 if provided, as the intermediate tube 130 moves in the machine direction MD. When the blow mold 170 closes about the intermediate tube 130, the blow mold 170 conforms the portion of the intermediate tube 130 that will define the open end of the container to mandrel 192, or the calibration mandrel 190 if provided.

If a calibration mandrel 190 is used, since the intermediate tube 130 loosely fits over the calibration mandrel 190, there is an excess of material that arises as the blow mold 170 closes upon the intermediate tube 130 and conforms the intermediate tube 130 to the calibration mandrel 190. The excess of material yields two flashings 133 proximal the location where the halves of the blow mold 170 meet. The amount of material in the flashing roughly corresponds with the amount of the intermediate tube 130 that can be eliminated so as to yield an open end of the container that has an open area orthogonal to the machine direction MD less than open area of the intermediate tube in that same direction. Thus, employing the calibration mandrel 190 as such allows the intermediate tube 130 to be formed into a container having an open end that has a smaller open area orthogonal to the machine direction MD than the open area of the intermediate tube 130 orthogonal to the machine direction MD. Without employing a calibration mandrel 190, the open end has the same or greater open area orthogonal to the machine direction MD as the open area of the intermediate tube 130 orthogonal to the machine direction MD. Such a container design may not be practical for containers having a narrow open end, such as a toothpaste tube.

As the halves of the blow mold 170 close upon the intermediate tube 130, the blow mold halves apply bearing pressure to the bonded overlapping portion 120 of the intermediate tube 130 against the underlying mandrel 192 calibration mandrel 190 to form the neck 194 and compress out the overlapping portion 120 so that the overlapping portion 120 that subsequently becomes the overlapping portion of the container in the neck portion of the container is not as defined as the overlapping portion 120 of the intermediate tube 130 prior to passing through the blow mold 170 or the overlapping portion 120 the ends up forming the overlapping seam of the container. The neck 194 can be a calibrated neck.

The intermediate tube 130 is closed at a pinch seam 135 formed where the halves of the blow mold 170 close at the bottom of the blow mold 170, with that portion of the intermediate tube 130 ultimately becoming the closed end of the container 200.

Blowing air or gas, optionally heated or cooled, is blown into the portion of the intermediate tube 130 below the mandrel 192, or calibration mandrel 190 if provided, and blows out the intermediate tube 130 into conformance with the halves of the blow mold 170. Prior to, during, or after blow molding the container 200, the blow mold 170, blowing cane 90, and mandrel 192, or calibration mandrel 190 if provided, can move in the machine direction MD to pull the intermediate tube 130, loose conduit 40, and web 30 along in the machine direction MD to advance the process in an indexed manner.

After the container 200 is blow molded and advanced, the blow mold 170 can be opened. Then the blow mold 170 and the mandrel 192, or calibration mandrel 190 if provided, can be moved upstream relative to the machine direction MD. Once the blow mold 170 and mandrel 192, or calibration mandrel 190 if provided, are in the proper position, the blow mold 170 can be closed upon the next portion of the intermediate tube 130 and the steps repeated to form another container 200.

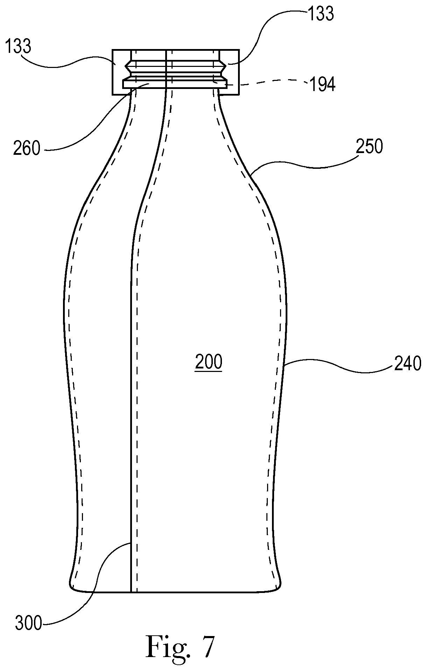

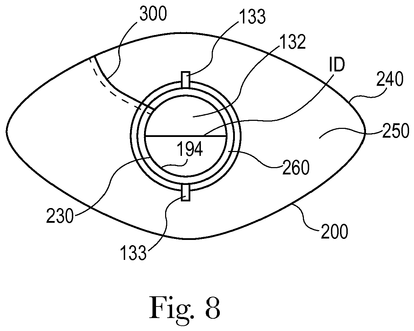

The finished container 200 can be cut from the material upstream of the finished container 200. The cut can be made at or slightly above the neck 194 to leave the neck 194 and other portions of the container 200 intact. If a calibrated neck 194 is provided by employing a calibration mandrel 190, any resulting flashings 133 can be removed from the container 200 via a cutting or breaking operation or removed by hand. A side view of a container 200 in which the flashings 133 are still attached to the container 200 in the neck portion 260 proximal the open end 230 is shown in Fig. 7. The flashings 133 can be thin fin protrusions extending away from the neck portion 260. Stated otherwise, the neck portion 260 can comprise two longitudinally extending flashings 133 projecting away from the longitudinal axis L on opposite sides of the neck portion 260. The neck portion 260 is proximal the open end 230. A top view of a container 200 in which the flashings 133 are still attached to the container 200 in the neck portion 260 proximal the open end 230 is shown in Fig. 8. The inside diameter ID is illustrated in Fig. 8. The calibrated neck 194 can have a calibrated neck open area 132, the open area measured orthogonal to the longitudinal axis L of the container 200. Since in making the container 200 with a calibrated neck 194 the intermediate tube 130 is forced into the calibration mandrel 190 to form the calibrated neck 194, the calibrated neck open area 132 is less than the intermediate tube open area 131. The flashings 133 can be cut off or broken off in a subsequent processing step either by machine or by hand.

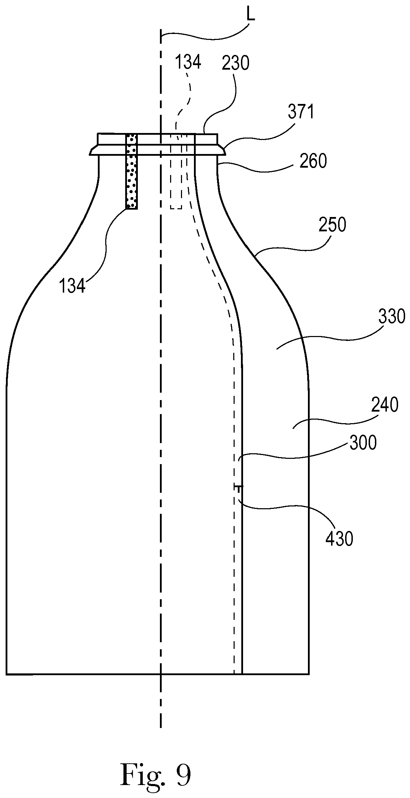

At the locations where the flashings 133 are removed from the container 200, two partially longitudinally extending flashing lines 134 can remain as evidence of the prior existence of the flashings 133, as shown in Fig. 9. The flashing lines 134 can be located on opposite sides of the neck portion 260. The flashing lines 134 can extend at least partially down the neck portion 260 from the open 230 towards the closed end 220. The flashing lines 134 are portions of the neck portion 260 that have a surface profile that differs from the surface profile of portions of the neck portion 260 away from the flashing lines 134. That is, the flashing lines 134 are scars on the neck portion 260, such scars being formed when the flashings 133 are removed.

The process of making disclosed herein can be employed to make a container in which the neck 194 is calibrated or not calibrated. If a calibrated neck 194 is desired, then the mandrel 192 employed in the process needs to be a calibration mandrel 190. If an uncalibrated neck 194 is desired, then the mandrel 192 can be an ordinary mandrel 192 to which the intermediate tube 130 can be conformed during subsequent blow molding.

Also shown in Fig. 9 is overlap magnitude 430. The overlap magnitude 430 is a measure of the amount of overlap in the overlapping seam 300. The overlap magnitude 430 can vary as a function of distance from the closed end 220. The magnitude of overlap in the intermediate tube 130 is constant. When the intermediate tube 130 is blown to form the container, the amount of stretch that occurs is non-uniform. Portions of the container 200 that are stretched more relative to other parts of the container 200 will have a greater overlap magnitude 430. The overlap magnitude can be a minimum at or proximal to the closed end 230, as shown in Fig. 9. The overlap magnitude 430 can vary along the overlap seam 300.

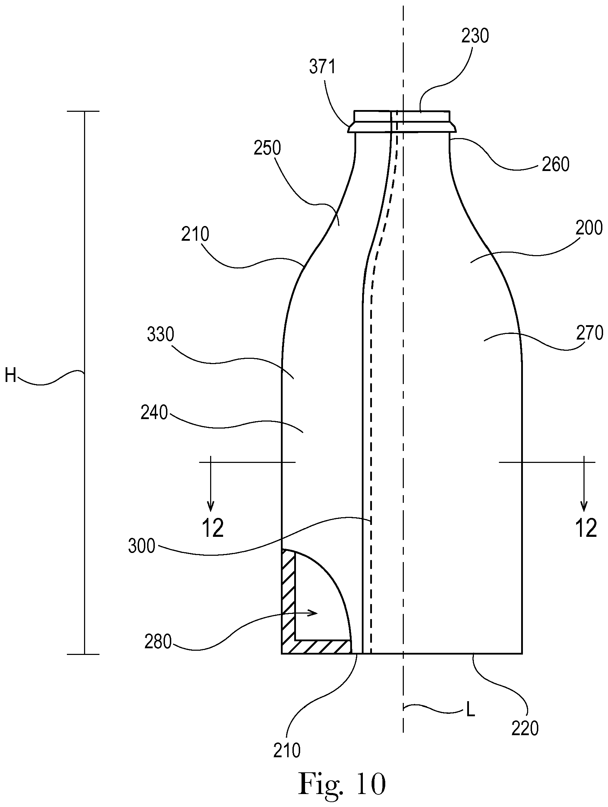

A container 200 formed by the process disclosed herein is shown in Fig. 10. The container can have closed end 220 and an opposing open end 230. The closed end 220 can be configured so as to be capable of resting upon a flat surface when the container 200 is in an upright position. The closed end 220 can be flat. A portion of the closed end 220 can have the shape of an annulus. The closed end 220 can have a plurality of feet sized and dimensioned to rest upon a flat surface.

The open end 230 can be the portion of the container 200 through which the contents of the container 200 are dispensed. The shape of the open end 230 is defined by the shape of the container wall 270 proximal the open end 230. The open end 230 can be defined by a circular opening in the container 200. The neck portion 260 can comprise a snap bead 371 positioned about the neck portion 260 proximal the open end 230. The snap bead 371 can provide for a fitment to which a plug seal closure can connect to close the container 200. A plug seal closure can be operatively engaged with the snap bead 371. The snap bead 371 can be proximal the open end 230.

Typically, a container 200 can be defined by a main body portion 240, a shoulder portion 250, and a neck portion 260. The main body portion 240 can account for more than about 50% of the total interior volume 280 of the container 200. The neck portion 260 can comprise less than about 5% of the interior volume 280 of the container 200. Together, the main body portion 240, shoulder portion 250, and neck portion 260 can account for 100% of the interior volume 280 of the container 200. The shoulder portion 250 can be the transition between the main body portion 240 and the neck portion 260. The neck portion 260 is proximal the open end 230. The shoulder portion 250 is between the neck portion 260 and the main body portion 240. Described otherwise, the shoulder portion 250 can be adjacent to both the neck portion 260 and the main body portion 240.

The container 200 can have a container wall 270 extending longitudinally between the closed end 220 and the open end 220 about a longitudinal axis L. The container wall 270 can comprise the main body portion 240, the shoulder portion 250, and neck portion 260. Together, the closed end 220 and the container wall 270 define the interior volume 280 of the container 200. Use of the term longitudinal axis L is not meant to necessarily imply any degree of symmetry about the longitudinal axis L. It is possible that the container wall 270 is asymmetric about the longitudinal axis. It is possible that the container wall 270 is symmetric about the longitudinal axis. It is possible that the entire container 200 is symmetric about the longitudinal axis L. It is possible that the closed end 220 and the container wall 270 are symmetric about the longitudinal axis. Rather, the longitudinal axis L is an axis passing through the open end 220 about which the container wall 270 extends. The closed end 220 can be sized and dimensioned so that the container 200 is free-standing on the closed end 220.

The container wall 270 can be considered to have an interior surface 320 defining the interior volume 280 of the container and an exterior surface 330 opposing the interior surface. Each of the main body portion 240, shoulder portion 250, and neck portion 260 can be considered to have an interior surface 320 and an exterior surface 330. The interior surface 320 can be oriented towards the longitudinal axis L and the exterior surface 330 can be oriented away from the longitudinal axis L.

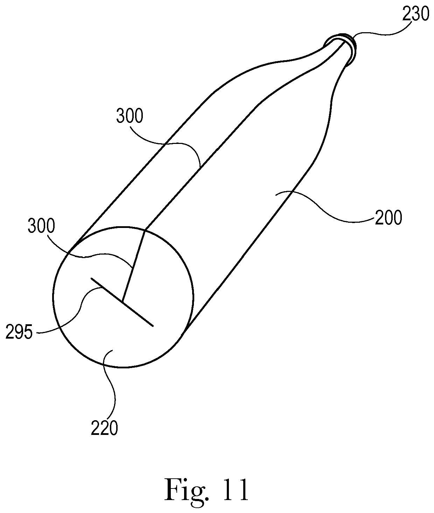

A perspective view of a container 200 showing the closed end 220 is shown in Fig. 11. As shown in Fig. 11, the container 200 can comprise an end seam 295 extending at least partially across the closed end 220 of the container. The end seam 295 can arise when the blow mold 170 is closed upon the intermediate tube 130. At that stage of the process the end seam 295 extends across the intermediate tube 130. Then the intermediate tube 130 is blown up to form the container 200. A portion of the closed end 220 of the container 200 can be formed of material that was formerly part of the wall of the intermediate tube 130.

The container 200 can further comprise a longitudinal overlapping seam 300 extending from the end seam 295. The longitudinal overlapping seam 300 can extend from any portion of the overlapping seam 200, for instance at one of the ends of the end seam 295 or at any location between ends of the end seam 295. A portion of the longitudinal overlapping seam 300 can extend longitudinally along the container wall 270 between the closed end 220 to the neck portion 260 of the container. This might occur if in the neck portion 260 the bonded overlapping portion 120 of the intermediate tube 130 ends up being part of flashing 133. A portion of the longitudinal overlapping seam 300 can extend longitudinally along the container wall 270 between the closed end 220 and the open end 230 of the container. This can occur if a calibrated neck 194 is not formed or in the case in which a calibrated neck 194 is formed and the bonded overlapping portion 120 of the intermediate tube 130 does not end up being part of the flashing 133.

The overlapping seam 300 can arise in the finished container 200 as a result of the conformer 100 closing upon loose conduit 40 in the process of forming the intermediate tube 130. The end seam 295 extending at least partially across the closed end 220 of the container can be a smoothed out pinch seam 135. That is the end seam 295 may be substantially smooth after a pinch seam 135 is formed in the intermediate tube 130 and is then deformed by blow molding to form the closed end 220 of the container.

A common one piece thermoplastic substrate 210 can form both the closed end 220 and the container wall 270. That is, the closed end 220 and the container wall 270 are comprised of a common one-piece distortion printed thermoplastic substrate 210. Stated otherwise, the closed end 220 and the container wall 270 are comprised of a common one-piece distortion printed thermoplastic substrate 210. The closed end 220 and the container wall 270 being a unitary one-piece thermoplastic substrate 210 arises as the web 30 or printed web is transformed from a flat web to a three-dimensional shape. Stated otherwise, the closed end 220 and the container wall 270 can consist of or comprise a one-piece thermoplastic substrate 210. That is, together, the closed end 220 and the container wall 270 can be formed from a single portion of web 30 that is shaped into a structure that is subsequently blow molded into a container 200. Stated otherwise, the container 200 can be described as being free from seams other than a seam extending at least partially across the closed end 220 and an overlapping seam 300 extending from the end seam 295, a portion of the overlapping seam 300 extending longitudinally along the container wall 270 between the closed end 220 and the open end 230. This construction of the container 200, in which the entire neck portion 260, shoulder portion 250, container wall 270, and closed end 220 are formed of a single integral substrate is practical in that the manufacturer is not required to assemble different parts of the container. This is unlike the construction of containers such as toothpaste tubes that are presently in the market in which the shoulder portion 250 and neck portion 260 are typically formed from an injection molded plastic insert that is bonded to the container wall 270 that is formed from a flexible substrate.

It is also thought that by having the shoulder portion 250 and container wall 270 formed of a single integral substrate that there is less potential for a leak to occur at such location since there is no potential for a leaky bond between the shoulder portion 250 and the container wall 270. Stated otherwise, the juncture between the shoulder portion 250 and the container wall 270 can be free from a seam. Further, the juncture between the neck portion 260 and the shoulder portion 250 can be free from a seam forming the juncture. Further, the juncture between the shoulder portion 250 and the container wall 270 can be free from a seam forming the juncture.

Since the closed end 220 and container wall 270 consist of or are comprised of a single portion of web 30, the end seam 295 across at least a portion of the closed end 220 of the container extends to or connects to overlapping seam 300 extending longitudinally along the container wall 270. As such, the overlapping seam 300 can be continuous across the boundary between the closed end 220 and container wall 270. The overlapping seam 300 can extend along the height H of the container 200. The height H of the container extends between the closed end 220 and the open end 230.

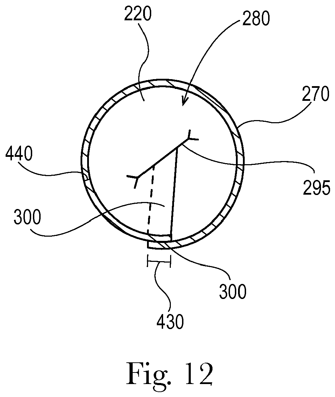

A cross section of the container 200 shown in Fig. 10 is shown in Fig. 12, the view being taken to show the closed end 220. As shown in Fig. 12, the overlapping seam 300 can extend across part of the closed end 220. The overlapping seam 300 across part of the closed end 220 can be connected to the end seam 295. As shown in Figs. 11 and 12, the overlapping seam 300 can extend from the end seam 295 across part of the closed end 220 of the container to the container wall 270 and longitudinally along the container wall 270 between the closed end 220 and open end 230. Stated otherwise, a portion of the longitudinal overlapping seam 300 can extend longitudinally along the container wall 270 between the closed end 220 and the open end 230 of the container and between the container wall 270 and the end seam 295. As such, the container 200 can comprise an overlapping seam 300 that is connected to the end seam 295 and extends partially across the closed end 220 of the container and longitudinally along at least part of the container wall 270 between the closed end 220 and the open end 230.

As shown in Fig. 12, at mid-height of the container 200, height being the straight line height between the closed end 220 and open end 230 parallel to the longitudinal axis L, the overlapping seam 300 along the container wall 270 has an overlap magnitude 430 of more than about 1.5 times the thickness 440 of the container wall 270 as measured at a distance from the overlapping seam 300 equal to the magnitude of overlap 430. As a result of blow molding to form the container 200, the container 200 can have a variety of thicknesses at different locations on the container. For example, the thickness of the container wall 270 in the main body portion 240 may be different from the thickness of the closed end 220, shoulder portion 250, and neck portion 260. The overlap magnitude 430 may vary at different locations along the overlapping seam 300 along the height H of the container 200. To provide for a common location at which to measure the overlap magnitude 430 regardless of height H of the container 200, the comparison of the overlap magnitude 430 can be taken at mid-height of the container 200. Without being bound by theory, it is thought that a representative measure of thickness of the container wall 270 can be taken at a distance from the overlapping seam equal to the overlap magnitude 430.

Such location is relatively near the seam but yet not so far from the overlapping seam 300 so as to be at a completely different part of the container 200, such as at a handle, if present, or some other decorative or functional part of the container 200. Further, thickness of the container wall 270 at the overlapping seam 300 along the height H of the container may vary as a function of location. Greater overlap might be measured at the maximum axial dimension of the container 200 as compared to the shoulder portion 250 or neck portion 260 since that portion of the container is stretched more during formation of the container 200 than the shoulder portion 250 or neck portion 260. The overlapping seam 300 at mid-height can be thicker than any other portion of the container wall 270 at mid-height.

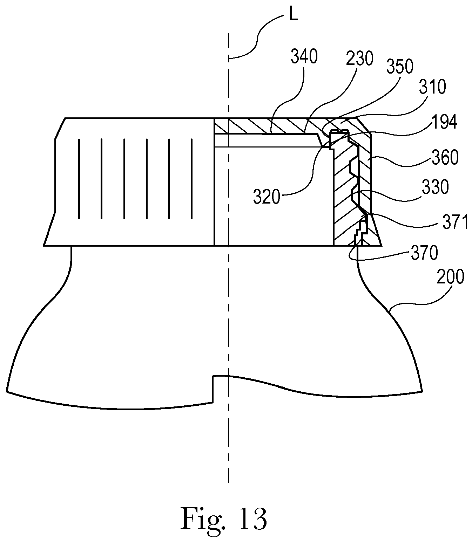

A plug seal closure 310 can be operatively engaged with the open end 230 of the container 200, as shown in Fig. 13. For a plug seal closure 310 to securely close a container 200, the open end 230 can be provided with a calibrated neck 194. A plug seal closure 310 is a closure in which a wedging surface 350 of the plug seal closure 310 wedges against the interior surface 320 of the open end 230 of the container 200. The wedging surface 350 can be a surface that abuts the interior surface 320 of the open end 230 of the container 200 in a facing relationship. That is the wedging surface 350 can be parallel to the interior surface 320 of the open end of the container 200. The wedging surface 350 can be wedge shaped in which the sloped surface of the wedging surface 350 contacts the interior surface 320 of the open end of the container 200. The wedging surface 350 can extend from the sealing face 340 of the plug seal closure 310. The sealing face 340 is the portion of the plug seal closure that is in facing relationship with interior volume 280 of the container 200. The sealing face 340 can be oriented orthogonal to the longitudinal axis L. Optionally, the portion of the plug seal closure 310 that wedges against the interior surface 320 of the open end 230 of the container 200 can be an annulus that extends from the sealing face 340 of the plug seal closure 310. The wedging surface 350 can extend from the sealing face 340 towards the interior volume 280 of the container 200.

The plug seal closure 310 can comprise a sealing face 340 and a closure wall 360 that extends from the sealing face 340. The closure wall 360 can extend down along a portion of the exterior surface 330 of the container 200, in particular the neck portion 260 and be operatively engaged with a portion of the exterior surface 330 of the container 200, for example the exterior surface 330 of the neck portion 260. The plug seal closure 310 can be an injection molded part. The plug seal closure 310 can be formed from a plastic material that can be injection molded. The plug seal closure 310 can be comprised of polypropylene. The plug seal closure 310 can be comprised of polyethylene.

The closure wall 360 can comprise a tab 370 extending inwardly from the closure wall 360 towards the container 200 and fit with a corresponding snap bead 371 disposed on the exterior surface 330 of the container wall 270. The tabs 370 can act to removeably lock the plug seal closure 310 to the container 200, in particular proximal the open end 230 or in other words, proximal the neck portion 260.

The plug seal closure 310 is sometimes referred to in the art as a valve seal. A plug seal closure 310 is a sealing mechanism that analogous to how a cork seals an opening in a bottle. For a plug seal closure 310 to reliably seal a package, the inside dimensions of the open end 230 of the container 200 can be provided within a certain tolerance. An irregular interior surface 320, such as dents, scratches, deformities, dimensional irregularities, and the like, of the open end 230 of the container 200 can reduce the efficacy of a plug seal closure 310. The plug seal closure 310 can be a snap-on plug seal closure 310 as shown in Fig. 13.

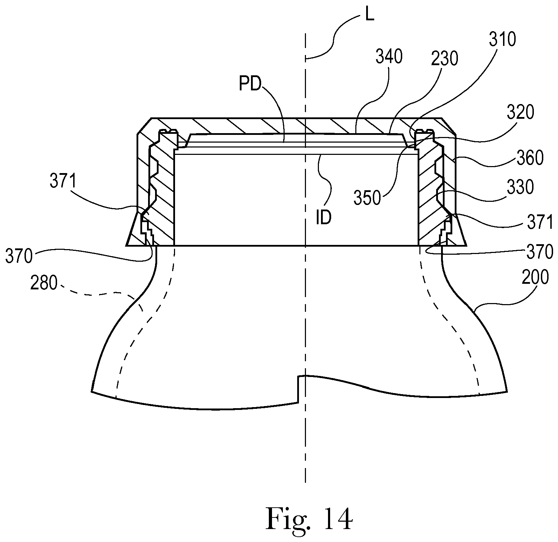

As shown in Fig. 14, the plug seal closure 310 can have a plug diameter PD. The plug diameter PD is the outer diameter of wedging surface 350. The plug diameter PD of the wedging surface 350 is measured from the longitudinal axis L of the plug seal closure 310 to the wedging surface 350. It can be practical that there is what is referred to in the art as interference between the wedging surface 350 and the interior surface 320 of the open end 230 of the container 200. For an open end 230 that is circular, there can be interference between the wedging surface 350 and the inside diameter ID of the open end 230 of the container 200. By interference it is meant that the wedging surface 350 is sized and dimensioned such that it has dimensions in directions orthogonal to the longitudinal axis L that are slightly larger than the dimensions of the interior surface 320 of the open end 230 of the container 200.

The plug seal closure 310 can comprise a wedging surface 350 in facing relationship with an interior surface 320 of the open end 230 of the container 200, wherein the wedging surface 350 is sized and dimensioned to interfere with the interior surface 320. The wedging surface 350 can interfere with the interior surface 320 of the open end 230 of the container 200. For a wedging surface 350 having a circular outer periphery, the interference can be the absolute value of the difference between the plug diameter PD of the plug seal closure 310 and the inside diameter ID of the open end 230 of the container 200. Arranged as such, the wedging surface 350 is wedged into the open end 230 of the container 200 so as to fit tightly, thereby reducing the potential for a leak to develop or for the plug seal closure 310 to become dislodged from the open end 230 of the container 200.

Without being bound by theory, it is thought that the magnitude of the interference between the wedging surface 350 and open end 230 of the container 200 can range from greater than zero to about 0.1 mm. The magnitude of the interference between the wedging surface 350 and open end 230 of the container 200 can range from greater than zero to about 1 mm. If the magnitude of interference is zero, then the wedging surface 350 just fits flush within the open end 230. The magnitude of the interference between the wedging surface 350 and open end 230 of the container 200 can range from about 0.1 mm to about 1 mm. The magnitude of the interference between the wedging surface 350 and open end 230 of the container 200 can range from about 0.2 mm to about 1 mm. By having interference between the wedging surface 350 and the interior surface 320 of the open end 230 of the container 200, the plug seal closure 310 is fit tightly within the open end 230 of the container 200, thereby providing a sealed closure for the container 200. It is contemplated that the container 200 can have a non-circular open end 230 and a corresponding non-circular wedging surface 350.

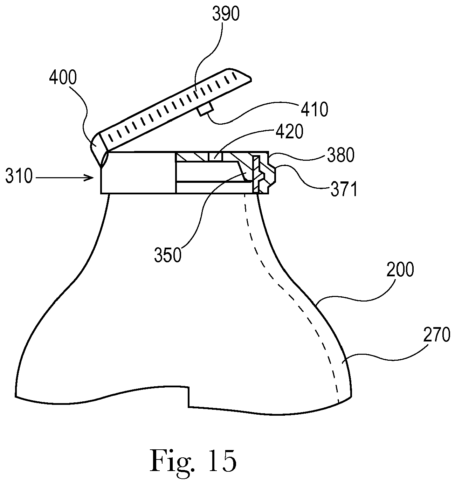

The plug seal closure 310 can be a flip-top plug seal closure 310, as shown in Fig. 15. As shown in Fig. 15 the plug seal closure 310 can comprise a collar 380 that fits to the open end 230 of the container 200. A flip-top 390 can be hingedly connected to the collar 380 so that the flip-top 390 can be rotated about a hinge 400 to open and close the flip top plug seal closure 310. The flip-top 390 can have a spud 410 extending from the flip-top 390 that can be sealingly engaged with an opening 420 in the collar 380. The spud 410 can provide for a plug seal.

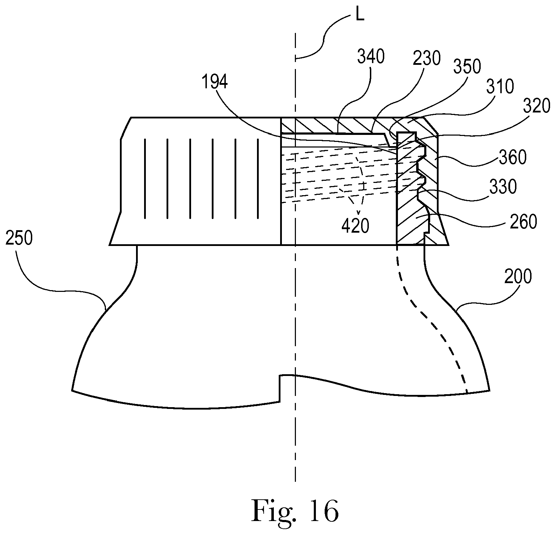

The plug seal closure 310 can be a threaded plug seal closure 310, as shown in Fig. 16. That is, the plug seal closure 310 can be screwed onto and off of the container 200. The closure wall 360 can comprise one or more threads 420 extending away from the closure wall 360 towards the exterior surface 330 of the container 200 and the open end 230 of the container can comprise one or more corresponding threads 420.

The open end 230 can be a calibrated neck 194. A calibrated neck 194 is an opening having dimensional tolerance sufficiently small so as to permit a plug seal closure 310 to be engaged with the container 200 with such plug seal closure 310 being leak-free under the physical stresses withstood by the package during the life-cycle of the package. A calibrated neck 194 can be formed by blowing the finished container 200 with a calibrated blow pin having a tip that is sized and dimensioned to form the inside diameter of the open end 230 of the container 200. The tip can compress the plastic into the thread area that is cut into the blow mold 170 if a thread is to be provided.

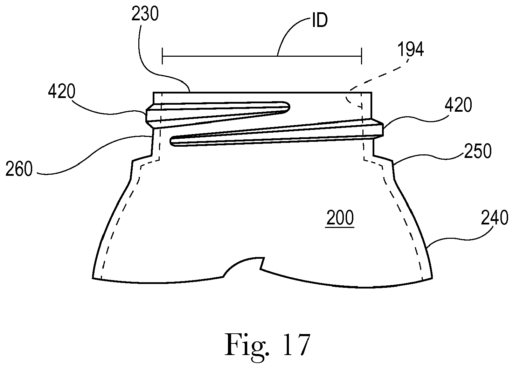

Figure 17 is an illustration of an open end 230 of a container 200. As shown in Fig. 17, the open end 230 can have an inside diameter ID spanning the open end 230. The tolerance of the inside diameter ID can be plus or minus about 2% of the inside diameter ID. That is, all inside diameters ID measured at the open end 230 will be within plus or minus about 2% of one another, or even plus or minus about 1.2% of one another, or even plus or minus about 1% of one another.

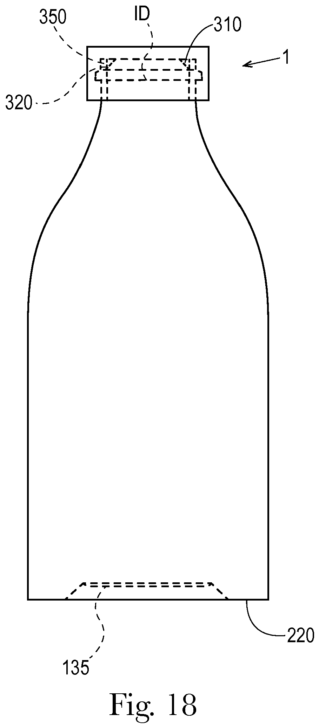

Together, the container 200 and the plug seal closure 310 can form a package 1, as shown in Fig. 18. That is, the package 1 can comprise a container 200 and a plug seal closure 310 engaged with the open end 230 of the container 200. The package 1 can be a package for liquid laundry detergent, powdered laundry detergent, shampoo, liquid soap, cooking oil, toothpaste, water, or other liquid, gel, or otherwise pourable substance. The purpose of the plug seal closure 310 is to ensure with a commercially reasonable degree of certainty that the package will not leak during the lifecycle of the package. For instance, the seal between the plug seal closure 310 and the container 200 may need to be robust enough such that the container 200 can be hot filled, the package 1 can be stored in boxes that are stacked on a pallet, the package 1 can withstand being dropped from a storage or sales shelf, the package 1 can endure changes in temperature and pressure, and the package 1 can undergo freezing and thawing cycles, all without leaking within a reasonable degree of certainty. The seal between the plug seal closure 310 and the container 200 may need to be robust enough such that contents of the package 1 are separated from the external environment so as to prevent cross contamination of the contents of the package 1, degradation of the contents of the package 1, and chemical reaction between the contents of the package 1 and substances external to the package.

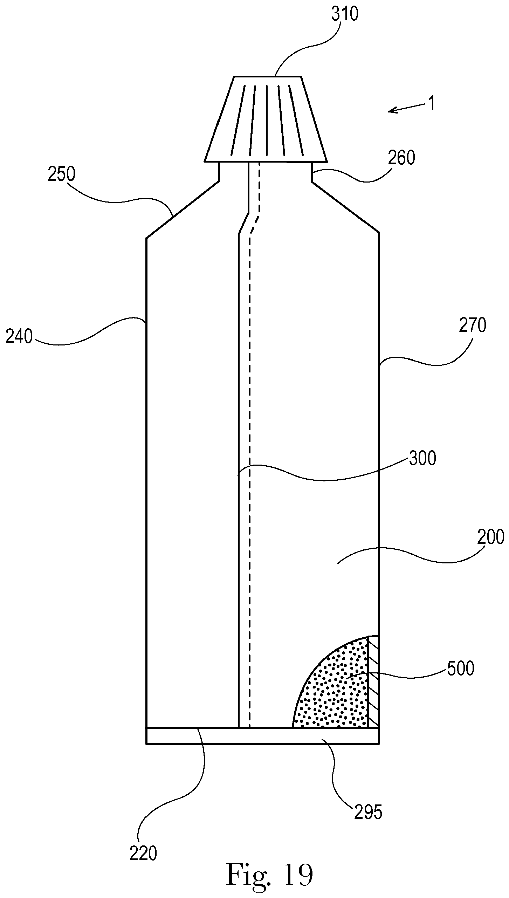

The package 1 can be a squeezable tooth paste tube for a tooth paste 500 contained in the container 200, as shown in Fig. 19.

Closures other than a plug seal closure 310 can be operatively engaged with the open end 230 of the container 200. Such closures can be suitable and provided if particulates are contained in the container 200 or if a liquid is contained in the container 200 and leakage from the container 200 is not of particular concern. For example, the container 200 can contain a particulate product such as powder laundry detergent, chocolate milk powder, rice, snack food, or like product.

As presented herein, a container with or without a calibrated neck 194 can be formed by the process of making a container 200 disclosed herein. If a calibrated neck 194 is formed by providing a calibration mandrel 190 in the process of making, a plug seal closure 310 can be provided to complement the calibrated neck 194 and together can comprise a tightly sealed package 1. If a simple mandrel 192 is provided in the process of making the container 200, the container 200 formed thereby can have a neck 194 that can be fitted with a closure without a plug seal or without a plug seal that functions with the neck 194 of the container 200. The closure can be for example, but not limited to, a spud closure, a threaded closure, or snap closure.

As disclosed herein, the container 200 can be formed by the steps of: forming a planar web 30 into a loose conduit 40 having an overlapping portion 120, the loose conduit 40 positioned about a blowing cane 90; bonding the overlapping portion 120 of the loose conduit 40 to form an intermediate tube 130 having an intermediate tube open area; advancing the intermediate tube 130 over the blowing cane 90 and the mandrel 192, or calibration mandrel 190 if provided, attached to the blowing cane 90; closing the blow mold 170 to enclose the intermediate tube 130 and conform at least a portion of the intermediate tube 130 to at least a portion of the mandrel 192, or calibration mandrel 190 if provided, to form a neck 194, or calibrated neck 194 if a calibration mandrel 190 is employed, having a neck open area, or calibrated neck open area if a calibrated neck 194 is formed, wherein the neck open area, or calibrated neck open area if a calibrated neck 194 is formed, is less than the intermediate tube open area; blow molding the intermediate tube 130 to form the container 200. The container 200 can have an open end 230.

The container 200 can have an open end 230 and the open end 230 can be a calibrated neck. If a calibrated neck 194 is provided, the calibrated neck 194 can have an inside diameter ID spanning the open end 230. The inside diameter ID can have a tolerance within plus or minus about 2% of the inside diameter ID. The inside diameter ID can have a tolerance within plus or minus about 1.2% of the inside diameter ID. The inside diameter ID can have a tolerance within plus or minus about 1% of the inside diameter ID. The closed end 220 can be sized and dimensioned so that the container 200 is free standing on the closed end 220. The thermoplastic substrate can comprise a composition selected from the group consisting of polyethylene terephthalate, polystyrene, polypropylene, polyethylene, polyvinyl chloride, nylon, ethyl vinyl alcohol, and mixtures thereof. The container 200 can have a height H extending between the open end 230 and the closed end 220 and the container wall 270 can have a thickness away from the overlapping seam 300, wherein at mid-height the overlapping seam 300 along the container wall 270 has an overlap magnitude of more than about 1.5 times the thickness of the container wall 270 as measured at a distance from the overlapping seam 300 equal to the overlap magnitude. The container 200 can have a height H extending between the open end 230 and the closed end 220 and the container wall 270 has a thickness away from the overlapping seam 300, wherein the overlapping seam 300 at mid-height is thicker than any other portion of the container wall 270 at mid-height. The open end 230 can be threaded. The open end 230 can be threaded on an outer surface of the open end 230. The open end 230 can be threaded on an inner surface of the open end 230. The neck portion 260 can comprise two longitudinally extending flashings 133 projecting away from the longitudinal axis L on opposite sides of the neck portion 260.

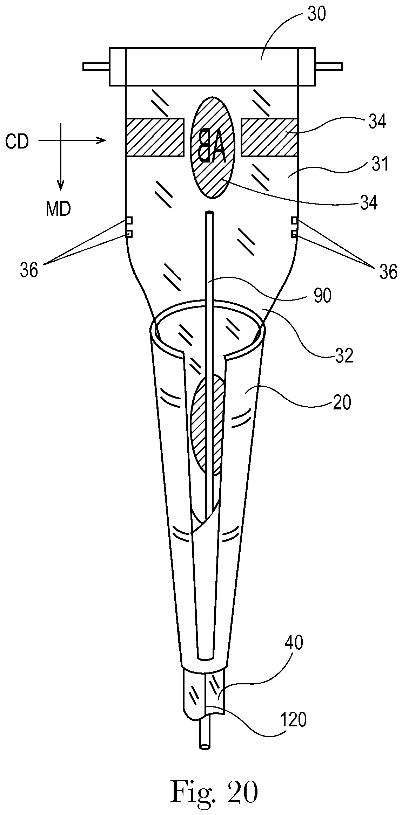

To provide for further benefit, the planar web 30 can be a printed planar web. The process of using a printed planar web can be particularly practical for reducing the cost and manufacturing complexity of labeled containers. Typically, manufacturers apply a label to a container by printing directly on the container, applying an adhesive label, using an in-mold label, applying a shrink-sleeve label, or blowing a pre-form having a printed sleeve wrapped there around. These processes are capital intensive because they require additional manufacturing steps that are often customized to the shape of the particular container. Conversely, quality printing on a flat web can be performed simply at low cost and at high speed, by way of non-limiting example using one or more or a combination of printing approaches including gravure, flexography, offset-lithography, letter-press, silk-screen, electrophotographic, and ink jet. Transforming a printed flat web into a labeled finished container as disclosed herein can be particularly attractive due to the simplicity and speed of printing on a flat web as compared to labeling a finished container or labeling during formation of the container. A printed planar web can be employed in the manner as described previously for a planar web. For instance, a printed planar web can employed to form a container having a calibrated neck if desired. Further, a printed planar web can be employed in a container that does not have a calibrated neck. A container 200 in which the closed end 220 and the container wall 270 comprise a one-piece printed thermoplastic substrate 210 can be formed using the process disclosed herein by providing a printed planar web 32 as the planar web 30, as shown in Fig. 20.

In essence, there is no difference in apparatus shown in Fig. 20 as compared to that shown in Fig. 1 with the exception that a printed planar web 32 is provided. The printed planar web 32 can be provided as a roll of pre-printed material. The printed planar web 32 can be printed on the same manufacturing line as the container formation line with the printing step being performed prior to forming the loose conduit 40. A printed planar web 32 is a planar web 30 that has printing disposed thereon or therein. The printing can be applied on a surface of the planar web 30 by reverse and/or surface print. The printing can be applied within a laminate of the planar web by reverse and/or surface print such that the printing is visible from a surface of the web. The printing can be covered by one or more protecting layers such as a varnish, clear coat, over-lamination, or the like.

The printed planar web 32 can comprise a first image 34 printed on or in the planar web 30. The printed planar web 32 can be any of the planar webs 30 disclosed herein. The machine direction MD of the planar web 30 or printed planar web 32 is the direction of movement of the web and the cross direction CD is orthogonal to the machine direction MD. The one-piece printed thermoplastic substrate 210 can be a distortion printed thermoplastic substrate 211.

As shown in Fig. 20, the printed planar web 32 can be translucent or transparent such that printing disposed thereon or therein is visible from both sides of the printed planar web 32, the cross hatching to indicate a color. If printing on the container is desired to be visible from the exterior of the container then the printing needs to be disposed such that when the printed planar web 32 is formed into loose conduit 40 the printing is visible on the exterior surface of the loose conduit 40. If a clear printed planar web 32 is used, the first image 34 can be visible from either opposing surface of the printed planar web 32.

The printed planar web 32 can be provided with one or more registration marks 36 as is known in the art to aid with automated web control so that the web is positioned properly during various operations performed as the on the printed planar web is transformed into a container.

If the printed planar web 32 is not sufficiently translucent so as to allow a first image 34 in or on the loose conduit 40 to be visible from the exterior of the loose conduit 40, then the first image 34 can be provided such that first image 34 is visible from the exterior of the loose conduit 40. Oriented as such, the first image 34 will be visible when the container 200 is viewed from the exterior of the container 200.

The first image 34 can be provided on the surface of the printed planar web 32. The first image 34 can be provided within a laminate comprising the printed planar web 32 as is known in the art of printed films. The first image 34 can be on the printed planar web 32 and covered by one or more translucent or transparent protection layers as is known in the art of printed films.

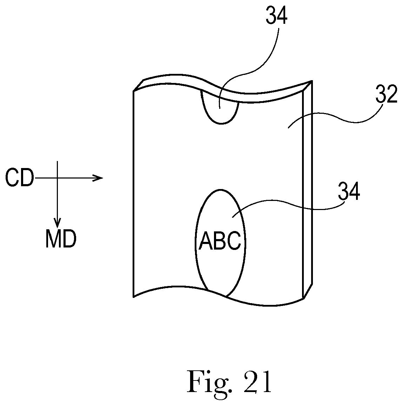

The first image 34 can be a distortion of the second image that is desired to be visible from the exterior of the container. The first image 34 can be smaller than the second image. Stated otherwise, the second image can be larger than the first image 34. For instance, as shown in Fig. 21, the first image 34 can be a tall generally oval shaped printed region containing the alphabetic letters of the brand of the product that will ultimately be contained in the package 1. As shown in Fig. 21, the alphabetic letters spelling out brand are tall and slender. When the printed planar web 32 is formed into the finished container 200 as disclosed herein, the first image 34 is stretched in the cross direction CD. This results in the first image 34 being transformed into a second image corresponding to a stretched out first image 34. For the first image 34 illustrated in Fig. 21, in the second image, the alphabetic letters spelling out the brand will be wider than the alphabetic letters as they appeared in the first image 34. Depending on the shape of the container 200, the first image 34 may be transformed in one or both of the cross direction CD and the machine direction MD when the intermediate tube 130 is blow molded into a container 200. The first image 34 can be any desired image, including but not limited to, text, solid colors, patterns, cartoon characters, indicia, inspirational images of the contents of the package 1, graphic designs, decoration, and the like.

The first image 34 need not be a discrete image bounded by an unprinted portion of the printed planar web. The first image 34 can be present and visible over the entire printed planar web 32 or a surface thereof. The first image 34 can be a decorative pattern. The first image can be a combination of indicia, including text, and one or more decorative patterns.

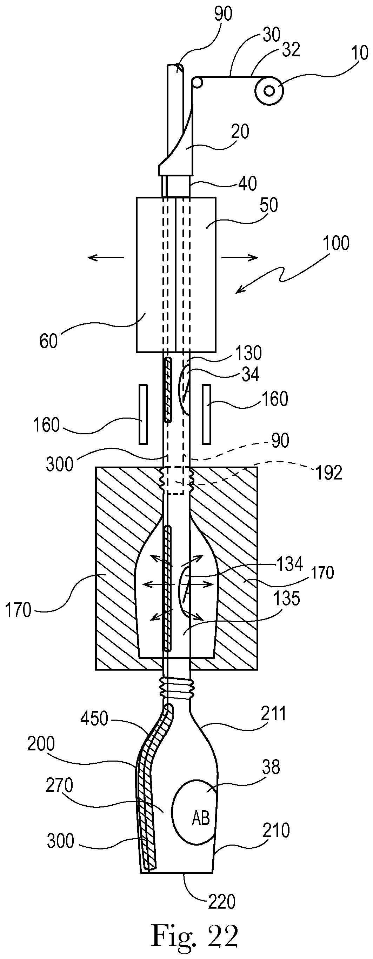

The transformation of an intermediate tube 130 formed from a printed planar web 32 to a container 200 wherein the closed end 220 and the container wall 270 comprise a one-piece distortion printed thermoplastic substrate 210 is illustrated in Fig. 22, the cross-hatching to indicate a color. A one-piece distortion printed thermoplastic substrate 211 is a thermoplastic substrate 210 that comprises a printed image wherein the thermoplastic substrate 210 is plastically deformed and the printed image is deformed consonant with the plastically deformed thermoplastic substrate 210.

The transformation of the first image 34 into the second image 38 results in a dilution of ink forming the first image 34. The mass per unit are of ink forming the first image 34 can be compensated to account for the amount of stretch the thermoplastic substrate 210 will undergo where the first image 34 resides. To provide for improved coloring of the second image 38, the ink concentration of one or more portions of the first image 34 that will undergo more stretching can be higher in mass of ink per unit area than portions of the first image 38 that will undergo less or no stretching.

As shown in Fig. 22, the first image 34 is visible from the exterior of the intermediate tube 130. The second image 38 is a distortion of the first image 34. As shown in Fig. 22, the thermoplastic substrate can comprise printing 450 at the overlapping seam 300. Printing 450 along the overlapping seam 300 can help mask the existence of the overlapping seam 300. The printing 450 can be proximal the overlapping seam 300. The printing 450 can be a solid color or a pattern, by way of non-limiting example.

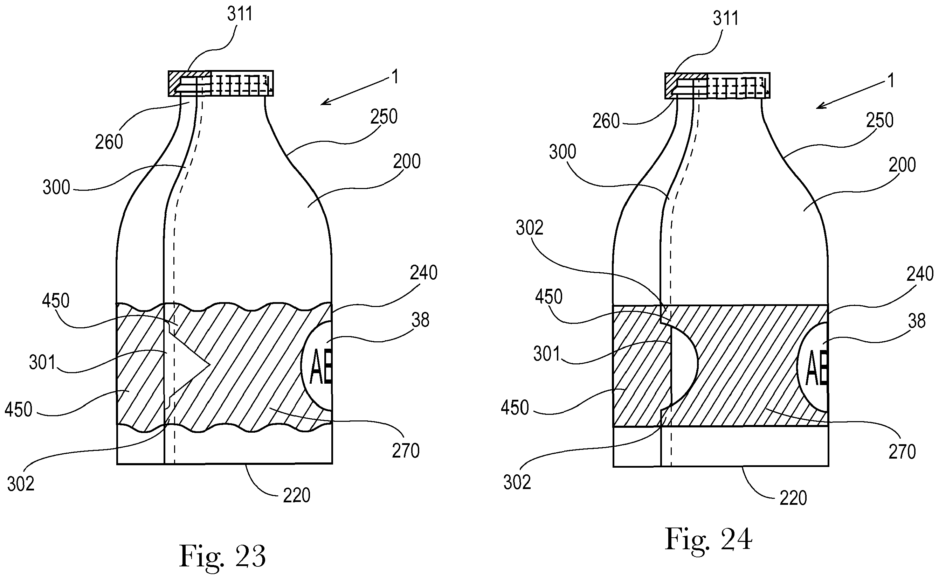

To obscure the overlapping seam 300 that extends longitudinally along the container wall 270, the one-piece distortion printed thermoplastic substrate 211 can comprise printing 450 at or proximal to the overlapping seam 300, as shown in Fig. 23, the cross-hatching shown on the container wall 240 indicative of color. Figure 23 is a partial sectional view in which a portion of the container wall 270 is removed to reveal the portion of the container wall that forms the inner portion of the overlapping seam 300. Visibility of the overlapping seam 300 can in some instances be undesirable since visibility of the seam may be indicative to the observer that the finished container 200 was manufactured in a manner that is different from conventional blow molding. Such observable difference may make the observer unsure of the integrity of the finished container 200 due to the unusual construction of the finished container 200 as compared to conventional blow molded containers or be suspect of the quality of the product contained in the container 200 since the container itself is unconventional. The printing 450 can be any desired image, including but not limited to, text, solid colors, half-tone images, process printed photographic images (cyan, magenta, yellow, and black), expanded gamut images, patterns, cartoon characters, other indicia, inspirational images of the contents of the package 1, graphic designs, decoration, and the like.

The overlapping seam 300 can have an outer portion 302 viewable from the exterior surface 320 of the finished container 200 and an inner portion 301 oriented towards the interior of the finished container 200 and forming part of the interior surface 320 of the container 200. The outer portion 302 can comprise printing 450. The outer portion 302 can comprise printing 450 and the printing 450 can abut printing 450 on the portion of the container wall 270 that extends from the inner portion 301 of the overlapping seam 300. In such an arrangement, to improve the desired effect of obscuring the overlapping seam 300, the intermediate tube 130 can be precisely aligned and seamed during formation. If the one-piece printed thermoplastic substrate 210 is translucent or transparent, the inner portion 301 can comprise printing 450 that is viewable through the outer portion 302 from the exterior of the container 200.

The overlapping seam 300 can have an outer portion 302 external to the finished container 200 and an underlying inner portion 301. The outer portion 302 and inner portion 301 can both comprise printing 450, as shown in Fig. 24, the cross-hatching shown on the container wall 240 indicative of color. Figure 24 is a partial sectional view in which a portion of the container wall 270 is removed to render the inner portion 301 to be directly visible from the exterior of the container 200. By having printing 450 in both the outer portion 302 and inner portion 301, less attention to precisely lining up the lateral edges 110 of the loose conduit is needed because the overlapping printing, with less attention being made manifest in increased process speed and reduced requirements for manufacturing control. This can be practical for decorative designs having a single printed color continuous across the overlapping seam 300.

As shown in Figs. 23-25, the package 1 can be provided with a closure 311. The closure 311 can be a plug seal closure 310 as described herein with the process of making the container as described herein. The closure 311 can be for example, but not limited to, a spud closure, a threaded closure, or snap closure.

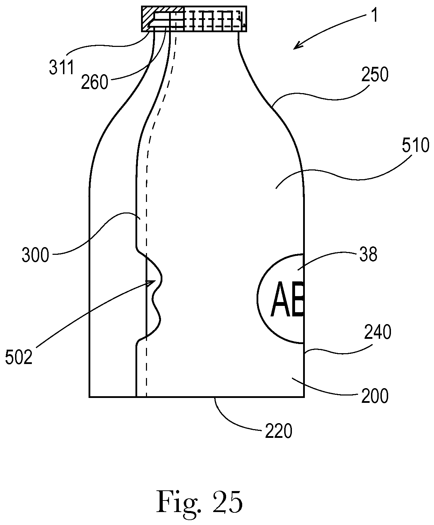

As shown in Fig. 25, the appearance of the longitudinal overlapping seam 300 can be defined by the constituent appearance of the one-piece distortion printed thermoplastic substrate 211. The one-piece distortion printed thermoplastic substrate 211 can be a pigmented one-piece distortion printed thermoplastic substrate 211. That is

The printed planar web 32 can be a pigmented printed planar web 32. The printed planar web 32 can be a pigmented planar web 32 comprising a first image 34. Pigmented planar webs can be desirable for forming containers having a particular color or visual effect and may be more economical that a translucent or transparent planar web 32 that is printed to provide the particular color or visual effect.

The second image 38 can be visible from the exterior of the container 200. The second image 38 can be visible from the exterior of the container 200 and be positioned away from the longitudinal overlapping seam 300. Manufacturing the container 200 so that the second image 38 is away from the overlapping seam 300 can be desirable so as to avoid issues with undesirable deformation or distortion of first image 34 when the intermediate tube 130 is assembled and subsequently blow molded and undesirable deformation or distortion of the of the second image 38 that might occur due to the non-uniform thickness of the container wall 270.

The second image 38 can be visible from the exterior of the container 200 and extend across the overlapping seam 300. Such an arrangement can be desirable for obscuring irregularities associated with overlapping seam 300 that might arise during formation of the intermediate tube 130 and subsequent blow molding.

As shown in Figs. 22, 23, 24, and 25, the container 200 can be free from any indicia other than that provided with the one-piece distortion printed thermoplastic substrate. For instance the container 200 may be free from an in-mold label, an adhesive label, printed shrink sleeve, or printed sleeve. The container 200 may be free from printing that is undistorted, undistorted printing be such printing that is applied after formation of the container 200.

The container 200 can be thought of as having interior volume 502 defined by the container wall 270, closed end 220, and open end 230. The container 200 can have an exterior 510 oriented outwardly away from the interior volume 502.

As shown in Figs. 20 and 22, a container 200 can be formed by a process comprising multiple steps. First a printed planar web 32 is formed into a loose conduit 40, the loose conduit having an overlapping portion 120. The printed planar web 32 can comprise a first image 34. The overlapping portion 120 of the loose conduit 40 can be bonded to form an intermediate tube 130 having an intermediate tube open area 131. The intermediate tube 130 can be advance over the blowing cane 90 and a mandrel 192 extending from the blowing cane 90. The blow mold 170 can be closed to partially enclose the intermediate tube 130. In the blow mold 170, the intermediate tube 130 can be blow molded to form the container 200 and thereby distort the first image 34 into a second image 38. The printed planar web 32 can be a distortion printed planar web 32. A distortion printed planar web 32 is a planar printed web that comprises a first image 34 sized and dimensioned to be distorted into a second image 38.

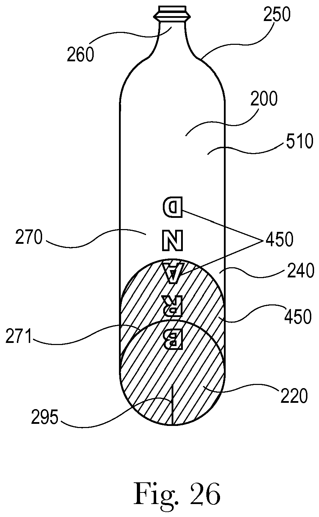

As shown in Fig. 26, the container wall 270 and the closed end 220 can comprise printing 450, the cross-hatching shown on the container wall 240 and closed end 220 indicative of color. The printing 450 can extend from the container wall 270 to the closed end 220. That is, the printing 450 can extend across the boundary 271 between the container wall 270 and the closed end 220. In the planning process for laying out the printing 450, the locations on the printed planar web 32 that will end up forming the container wall 270 and closed end 220 can be mapped. Appropriately laid out printing 450 can be provided on the printed planar web 32 such that when the printed planar web 32 is formed into the intermediate tube 130 and then subsequently blow molded the printing 450 ends up being located at the desired location on the container 200. As disclosed herein, without using a sleeve, printing 450 can be provided on the closed end 220 and container wall 270 of a blow molded container 200 without the need for separate printing unit operations for printing the various locations and without the need for complicated container positioning apparatus.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A container (200) comprising: an open end (230); a closed end (220) opposing said open end (230); a container wall (270) extending longitudinally between said closed end (220) and said open end (230) about a longitudinal axis; an end seam (295) extending at least partially across said closed end (220); and a longitudinal overlapping seam (300) extending from said end seam (295), a portion of said overlapping seam (300) extending longitudinally along said container wall (270) from said closed end (220) to a neck portion (260) proximal said open end (230); wherein a common one-piece distortion printed thermoplastic substrate (210) forms both said closed end (220) and said container wall (270).

2. The container according to Claim 1, wherein said one-piece distortion printed thermoplastic substrate comprises printing at said overlapping seam.

3. The container according to Claim 1 or Claim 2, wherein said overlapping seam comprises an outer portion visible external to said container and an underlying inner portion, wherein said outer portion and said inner portion both comprise printing.

4. The container according to any one of the preceding claims, wherein said open end is narrower than at least a portion of said container away from said open end of said container.

5. The container according to any one of the preceding claims, wherein a plug seal closure is operatively engaged with said open end of said container.

6. The container according to any one of the preceding claims, wherein said closed end is sized and dimensioned so that said container is free standing on said closed end.

7. The container according to any one of the preceding claims, wherein said thermoplastic substrate comprises a composition selected from the group consisting of polyethylene terephthalate, polystyrene, polypropylene, polyethylene, polyvinyl chloride, nylon, ethyl vinyl alcohol, and mixtures thereof.

8. The container according to any one of the preceding claims, wherein said container has a height extending between said open end and said closed end and said container wall has a thickness away from said overlapping seam, wherein at mid-height said overlapping seam along said container wall has an overlap magnitude of more than about 1.5 times said thickness of said container wall as measured at a distance from said overlapping seam equal to said overlap magnitude.

9. The container according to any one of the preceding claims, wherein said container has a height extending between said open end and said closed end and said container wall has a thickness away from said overlapping seam, wherein said overlapping seam at mid-height is thicker than any other portion of said container wall at mid-height.

10. The container according to any one of the preceding claims, wherein said overlapping seam has an overlap magnitude that varies as a function of distance from said closed end and the overlap magnitude is at a minimum proximal said open end.

11. The container according to Claim 10, wherein said container has a height extending between said open end and said closed end and said container wall has a thickness away from said overlapping seam, wherein at mid-height said overlap magnitude of said overlapping seam along said container wall is more than about 1.5 times said thickness of said container wall as measured at a distance from said overlapping seam equal to said overlap magnitude

12. The container according to any one of the preceding claims, wherein said open end is threaded.

13. The container according to any one of the preceding claims, wherein said neck portion comprises two partially longitudinally extending flashing lines on opposite sides of said neck portion.

14. The container according to any one of the preceding claims, wherein said container wall and said closed end comprise printing.

15. A process for making the container according to any one of the preceding claims comprising the steps of:
a. forming a distortion printed planar web into a loose conduit having an overlapping portion, said distortion printed planar web comprising a first image;
b. bonding said overlapping portion of said loose conduit to form an intermediate tube having an intermediate tube open area;
c. advancing said intermediate tube over said blowing cane and a mandrel extending from said blowing cane;
d. closing a blow mold to partially enclose said intermediate tube; and
e. blow molding said intermediate tube to form said container and thereby distorting said first image into a second image.

## Patentansprüche

1. Behälter (200) umfassend: ein offenes Ende (230), ein dem offenen Ende (230) entgegengesetztes geschlossenes Ende (220); eine Behälterwand (270), die sich in Längsrichtung zwischen dem geschlossenen Ende (220) und dem offenen Ende (230) um eine Längsachse erstreckt; eine Endnaht (295), die sich zumindest teilweise über das geschlossene Ende (220) erstreckt; und eine longitudinale Überlappungsnaht (300), die sich von der Endnaht (295) erstreckt, wobei ein Bereich der Überlappungsnaht (300) sich in Längsrichtung entlang der Behälterwand (270) von dem geschlossenen Ende (220) zu dem einem Halsbereich proximalen offenen Ende (230) erstreckt, wobei ein gemeinsames einteiliges verformungsgedrucktes thermoplastisches Substrat (210) sowohl das geschlossene Ende (220) als auch die Behälterwand (270) bildet.

2. Behälter nach Anspruch 1, wobei das einteilig verformungsgedruckte thermoplastische Substrat Bedruckung an der Überlappungsnaht umfasst.

3. Behälter nach Anspruch 1 oder Anspruch 2, wobei die Überlappungsnaht einen äußeren Bereich, der außen an dem Behälter sichtbar ist und einen darunterliegenden inneren Bereich umfasst, wobei der äußere Bereich und der innere Bereich beide Bedruckung umfassen.

4. Behälter nach einem der vorhergehenden Ansprüche, wobei das offene Ende schmäler ist als zumindest ein Bereich des Behälters, der von dem offenen Ende des Behälters entfernt ist.

5. Behälter nach einem der vorhergehenden Ansprüche, wobei ein Stopfendichtungsverschluss in Eingriff mit dem offenen Ende des Behälters steht.

6. Behälter nach einem der vorhergehenden Ansprüche, wobei das geschlossene Ende derart bemessen und dimensioniert ist, dass der Behälter auf dem geschlossenen Ende frei stehend ist.

7. Behälter nach einem der vorhergehenden Ansprüche, wobei das thermoplastische Substrat eine Verbindung umfasst, die aus der Gruppe bestehend aus Polyethylen-Terephtalat, Polystyrol, Polypropylen, Polyethylen, Polyvinylchlorid, Nylon, Ethywinylalkohol, und Mischungen hiervon, ausgewählt ist.

8. Behälter nach einem der vorhergehenden Ansprüche, wobei der Behälter eine Höhe hat, die sich zwischen dem offenen Ende und dem geschlossenen Ende erstreckt, und die Behälterwand von der Überlappungsnaht weg eine Wandstärke hat, wobei auf mittlerer Höhe die Überlappungsnaht entlang der Behälterwand eine Überlappungsausdehnung von mehr als dem 1,5-fachen der Wandstärke der Behälterwand hat, gemessen bei einem Abstand von der Überlappungsnaht, der gleich der Überlappungsausdehnung ist.

9. Behälter nach einem der vorhergehenden Ansprüche, wobei der Behälter eine Höhe hat, die sich zwischen dem offenen Ende und dem geschlossenen Ende erstreckt, und die Behälterwand von der Überlappungsnaht weg eine Wandstärke hat, wobei die Überlappungsnaht auf mittlerer Höhe dicker ist als jeder andere Bereich der Behälterwand auf mittlerer Höhe.

10. Behälter nach einem der vorhergehenden Ansprüche, wobei die Überlappungsnaht eine Überlappungsausdehnung hat, die in Abhängigkeit des Abstandes von dem geschlossenen Ende variiert, und wobei die Überlappungsausdehnung am geringsten in der Nähe des offenen Endes ist.

11. Behälter nach Anspruch 10, wobei der Behälter eine Höhe hat, die sich zwischen dem offenen Ende und dem geschlossenen Ende erstreckt und wobei die Behälterwand von der Überlappungsnaht weg eine Wandstärke hat, wobei auf mittlerer Höhe die Überlappungsausdehnung der Überlappungsnaht mehr als das 1,5-Fache der Wandstärke der Behälterwand ist, gemessen bei einem Abstand von der Überlappungsnaht, der gleich der Überlappungsausdehnung ist.

12. Behälter nach einem der vorhergehenden Ansprüche, wobei das offene Ende mit einem Gewinde versehen ist.

13. Behälter nach einem der vorhergehenden Ansprüche, wobei der Halbsbereich zwei sich zum Teil in Längsrichtung erstreckende Gratlinien auf gegenüberliegenden Seiten des Halsbereichs umfasst.

14. Behälter nach einem der vorhergehenden Ansprüche, wobei die Behälterwand und das geschlossenen Ende Bedruckung umfassen.

15. Verfahren zum Formen des Behälters nach einem der vorhergehenden Ansprüche, die folgenden Schritte umfassend:
a. Formen einer verformungsgedruckten flachen Bahn in einen losen Schlauch, der einen Überlappungsbereich hat, wobei die verformungsgedruckte flache Bahn ein erstes Bild umfasst;
b. Verbinden des Überlappungsbereichs des offenen Rohrs, um ein Zwischenrohr zu formen, das eine Zwischenrohr-Öffnungsfläche hat,
c. Vorschieben des Zwischenrohrs über ein Blasrohr und einen Dorn, der sich von dem Blasrohr erstreckt;
d. Schließen einer Blasform, um das Zwischenrohr teilweise zu umschließen,
e. Blasformen des Zwischenrohrs, um den Behälter zu formen und dabei das erste Bild in ein zweites Bild zu verformen.

## Revendications

1. Récipient (200) comprenant : une extrémité ouverte (230) ; une extrémité fermée (220) opposée à ladite extrémité ouverte (230) ; une paroi de récipient (270) s'étendant longitudinalement entre ladite extrémité fermée (220) et ladite extrémité ouverte (230) autour d'un axe longitudinal ; un raccord d'extrémité (295) s'étendant au moins partiellement en travers de ladite extrémité fermée (220) ; et un raccord à chevauchement (300) longitudinal s'étendant à partir dudit raccord d'extrémité (295), une partie dudit raccord à chevauchement (300) s'étendant longitudinalement le long de ladite paroi de récipient (270) de ladite extrémité fermée (220) à une partie formant goulot (260) à proximité de ladite extrémité ouverte (230) ; dans lequel un substrat thermoplastique (210) imprimé avec déformation d'un seul tenant commun forme à la fois ladite extrémité fermée (220) et ladite paroi de récipient (270).

2. Récipient selon la revendication 1, dans lequel ledit substrat thermoplastique imprimé avec déformation d'un seul tenant comprend une impression au niveau dudit raccord à chevauchement.

3. Récipient selon la revendication 1 ou la revendication 2, dans lequel ledit raccord à chevauchement comprend une partie extérieure visible depuis l'extérieur dudit récipient et une partie intérieure sous-jacente, dans lequel ladite partie extérieure et ladite partie intérieure comprennent toutes deux une impression.

4. Récipient selon l'une quelconque des revendications précédentes, dans lequel ladite extrémité ouverte est plus étroite qu'au moins une partie dudit récipient située à distance de ladite extrémité ouverte dudit récipient.

5. Récipient selon l'une quelconque des revendications précédentes, dans lequel un dispositif de fermeture sous forme de bouchon à friction est en prise de manière fonctionnelle avec ladite extrémité ouverte dudit récipient.

6. Récipient selon l'une quelconque des revendications précédentes, dans lequel ladite extrémité fermée est dimensionnée et façonnée de telle sorte que ledit récipient soit autoporteur sur ladite extrémité fermée.

7. Récipient selon l'une quelconque des revendications précédentes, dans lequel ledit substrat thermoplastique comprend une composition sélectionnée dans le groupe constitué du téréphtalate de polyéthylène, du polystyrène, du polypropylène, du polyéthylène, du polychlorure de vinyle, du nylon, de l'alcool éthylvinylique et de mélanges de ceux-ci.

8. Récipient selon l'une quelconque des revendications précédentes, ledit récipient présentant une hauteur s'étendant entre ladite extrémité ouverte et ladite extrémité fermée et ladite paroi de récipient présentant une épaisseur à distance dudit raccord à chevauchement, dans lequel, à mi-hauteur, ledit raccord à chevauchement le long de ladite paroi de récipient présente une étendue de chevauchement correspondant à plus d'environ 1,5 fois ladite épaisseur de ladite paroi de récipient telle que mesurée à une distance dudit raccord à chevauchement égale à ladite étendue de chevauchement.

9. Récipient selon l'une quelconque des revendications précédentes, ledit récipient présentant une hauteur s'étendant entre ladite extrémité ouverte et ladite extrémité fermée et ladite paroi de récipient présentant une épaisseur à distance dudit raccord à chevauchement, dans lequel ledit raccord à chevauchement, à mi-hauteur, est plus épais que toute autre partie de ladite paroi de récipient à mi-hauteur.

10. Récipient selon l'une quelconque des revendications précédentes, dans lequel ledit raccord à chevauchement présente une étendue de chevauchement qui varie en fonction de la distance vis-à-vis de ladite extrémité fermée et l'étendue de chevauchement est minimale à proximité de ladite extrémité ouverte.

11. Récipient selon la revendication 10, ledit récipient présentant une hauteur s'étendant entre ladite extrémité ouverte et ladite extrémité fermée et ladite paroi de récipient présentant une épaisseur à distance dudit raccord à chevauchement, dans lequel, à mi-hauteur, ladite étendue de chevauchement dudit raccord à chevauchement le long de ladite paroi de récipient correspond à plus d'environ 1,5 fois ladite épaisseur de ladite paroi de récipient telle que mesurée à une distance dudit raccord à chevauchement égale à ladite étendue de chevauchement.

12. Récipient selon l'une quelconque des revendications précédentes, dans lequel ladite extrémité ouverte est filetée.

13. Récipient selon l'une quelconque des revendications précédentes, dans lequel ladite partie formant goulot comprend deux jointures s'étendant partiellement longitudinalement sur des côtés opposés de ladite partie formant goulot.

14. Récipient selon l'une quelconque des revendications précédentes, dans lequel ladite paroi de récipient et ladite extrémité fermée comprennent une impression.

15. Procédé de fabrication du récipient selon l'une quelconque des revendications précédentes, comprenant les étapes suivantes :
a. mettre une bande plane imprimée avec déformation sous forme de conduit lâche comportant une partie à chevauchement, ladite bande plane imprimée avec déformation comprenant une première image ;
b. assembler ladite partie à chevauchement dudit conduit lâche de façon à former un tube intermédiaire comportant une région ouverte de tube intermédiaire ;
c. avancer ledit tube intermédiaire sur ladite tige de soufflage et un mandrin s'étendant à partir de ladite tige de soufflage ;
d. fermer un moule pour soufflage de façon à enfermer partiellement ledit tube intermédiaire ; et
e. mouler par soufflage ledit tube intermédiaire de façon à former ledit récipient et déformer ainsi ladite première image de manière à produire une seconde image.
